# EUROPÄISCHE PATENTSCHRIFT

(11) **EP 3 714 091 B1**
(45) Veröffentlichungstag und Bekanntmachung des Hinweises auf die Patenterteilung: **17.11.2021**
(21) Anmeldenummer: 18811199.1
(22) Anmeldetag: 23.11.2018
(51) Int. Cl.: D04H 3/115, D04H 3/004, C08J 5/04, F03D 1/06

(54) **UNIDIREKTIONALES GELEGE UND DESSEN VERWENDUNG**
UNIDIRECTIONAL LAID NONWOVEN AND USE THEREOF
TISSU UNIDIRECTIONNEL ET SON UTILISATION

(30) Priorität: 24.11.2017 DE 102017127868
(43) Veröffentlichungstag der Anmeldung: 30.09.2020
(73) Patentinhaber: Saertex GmbH & Co. KG, 48369 Saerbeck (DE)
(72) Erfinder: MÖCKE, Dietmar, 48147 Münster (DE); BAKKER, Steven, 48149 Münster (DE); ENGELER, Christoph, 48291 Telgte (DE)
(74) Vertreter: Werner & ten Brink
(86) Internationale Anmeldenummer: PCT/EP2018/082459
(87) Internationale Veröffentlichungsnummer: WO 2019/101975

(56) Entgegenhaltungen:
- EP-A1- 2 927 361
- EP-A2- 2 330 292
- WO-A1-2009/087192
- DE-A1-102014 222 144
- GB-A- 2 249 050
- US-A- 5 520 984
- DATABASE WPI Week 201073 Thomson Scientific, London, GB; AN 2010-N55838 XP002788156, -& CN 201 592 537 U (ZHEJIANG LIANYANG COMPOUND MATERIAL CO L) 29. September 2010 (2010-09-29)

## Beschreibung

Die vorliegende Erfindung bezieht sich auf ein unidirektionales Gelege aus Glasfaserrovingen zur Herstellung von Faserverbundwerkstoffen mit einer ersten Stabilisierungslage auf dessen Unterseite und einer zweiten Stabilisierungslage auf dessen Oberseite sowie auf dessen Verwendung.

Zur Herstellung von Faserverbundwerkstoffen können textile bzw. Faser-Anordnungen verwendet werden, die bereits mit Matrixharz entsprechend dem zu verstärkenden Kunststoff imprägniert sind, auch Prepreg genannt, und etwa im Autoklav-Verfahren unter Druck und Temperatur zu Bauteilen aus faserverstärkten Kunststoffen weiterverarbeitet werden können. Weit verbreitet ist auch die Verwendung von nicht mit Harz imprägnierten bzw. trockenen textilen Anordnungen, die mittels Harzinjektionsverfahren, insbesondere vakuumunterstützten Verfahren zu Bauteilen aus faserverstärkten Kunststoffen weiterverarbeitet werden. Diese lassen sich viel einfacher drapieren als bereits imprägnierte textile Anordnungen. Insbesondere bei komplexeren Bauteilen kann es für die spätere Weiterverarbeitung mittels Harzinjektionsverfahren von Vorteil sein, die textile Anordnung, dann auch Preform oder Vorformling genannt, zumindest ansatzweise bereits in die gewünschte Form zu drapieren und ggf. beispielsweise durch Zugabe von geringen Bindemittelmengen und leichte Wärme- und/oder Druckeinwirkung in dieser Form zu fixieren.

Bei den textilen Anordnungen kann es sich um Vliese, Matten, Gewebe, Geflechte, Gestricke, Gewirke und insbesondere Gelege handeln. Gelege können aus einer, zwei oder mehreren Lagen aus jeweils zueinander parallelen Fasern gebildet sein. Bei einem Gelege, bei dem alle Lagen im Wesentlichen die gleiche Faserorientierung aufweisen, d.h. in jeder Lage der ganz überwiegende Teil der Fasern, z.B. 95% der Fasern oder mehr die gleiche Orientierung aufweist, spricht man von einem unidirektionalen Gelege. Wenn es Lagen mit zwei unterschiedlichen Faserorientierungen aufweist, handelt es sich um ein biaxiales Gelege. Wenn es Lagen mit mehr als zwei unterschiedlichen Faserorientierungen aufweist, handelt es sich um ein Multiaxialgelege. In der Regel weist ein unidirektionales Gelege eine Faserlage, ein biaxiales Gelege zwei Faserlagen und ein Multiaxialgelege drei oder mehr Faserlagen auf.

Bei den Fasern kann es sich um Filamente, um Garne, also gedrehte und/oder gezwirnte Filamentbündel, oder um Rovinge, d.h. ungedrehte Bündel aus annähernd parallel zusammengefassten endlosen Filamenten, handeln. Rovinge haben durch die Verwendung parallel liegender Filamente den Vorteil besonders guter Verstärkungseigenschaften und hohem Faservolumenanteil. Insbesondere in Gelegen können die Rovinge zum Erhalt einer dünnen flächigen textilen Anordnung gespreizt sein. Innerhalb eines unidirektionalen Geleges können die einzelnen Rovinge mehr oder weniger beabstandet voneinander oder auch teilweise oder ganz überlappend angeordnet sein. Dabei können wenige, einige, viele, der überwiegende Teil oder alle Rovinge gespreizt sein.

Die Fasern können beispielsweise aus Kohlenstoff oder aus Glas sein, wobei Kohlenstofffasern eine deutlich höhere Zugfestigkeit als Glasfasern aufweisen. In der Weiterverarbeitung zu textilen Anordnungen, insbesondere in Form von Gelegen sind Glasfasern komplizierter in der Handhabung, da sie deutlich glattere Oberflächen als Kohlenstofffasern aufweisen und daher eher voneinander abgleiten. Insbesondere können die Fasern bei der Zuführung von unidirektionalen Lagen in Wirkmaschinen bis zur Nähwirkstelle verrutschen oder weggleiten. Kohlenstofffasern dagegen können sich wegen ihrer raueren Oberfläche miteinander verhaken und damit gegenseitig eher in einer bestimmten Lage halten. Allerdings sind Glasfasern deutlich kostengünstiger als Kohlenstofffasern.

DE 10 2014 222 144 A1 offenbart ein Verfahren zum Stabilisieren von unidirektionalen Gelegen unter Verwendung von in einer Längsrichtung erstreckenden Nähten.

WO 2009/087192 A1 offenbart die Verwendung eines unidirektionalen Gelege aus Glasfasern zur Herstellung von Leichtbaustrukturen in Rotorblättern für Windkraftanlagen.

Es ist eine Aufgabe der vorliegenden Erfindung, alternative unidirektionale Gelege aus Glasfaserrovingen vorzuschlagen.

Diese Aufgabe wird gelöst durch ein unidirektionales Gelege aus Glasfaserrovingen zur Herstellung von Faserverbundwerkstoffen mit einer ersten Stabilisierungslage auf dessen Unterseite und einer zweiten Stabilisierungslage auf dessen Oberseite, wobei sie mittels Franse-Vernähung miteinander vernäht sind.

Durch das Vorsehen von zwei Stabilisierungslagen und der Franse-Vernähung kann die Handhabbarkeit des unidirektionalen Geleges aus Glasfaserrovingen verbessert werden, da ein Abgleiten der Rovinge damit besser unterbunden und die Drapierbarkeit des Geleges verbessert werden kann. Besonders ausgeprägt ist dies bei unidirektionalen Gelegen aus nur einer Glasfaserrovinglage.

Nähen sei hier im Sinne von mechanischem Verbinden durch einen maschenbildenden Prozess verstanden. Dies kann beispielsweise auf einer Kettenwirkmaschine oder einer Nähwirkmaschine durchgeführt werden. Der dabei verwendete Faden kann Nähfaden oder Wirkfaden genannt werden. Die Franse-Vernähung hat gegenüber anderen Maschenbildungsarten wie etwa Trikot- oder Tuch-Legung oder Gestrick etc. den Vorteil, dass die bei der Maschenbildung gebildeten Maschenstäbchen keine seitliche Verbindung haben. Es hat sich herausgestellt, dass dadurch nicht nur die Drapierbarkeit des Geleges deutlich erhöht wird. Bevorzugt verlaufen die Glasfaserrovinge in Längsrichtung des unidirektionalen Geleges.

Besonders bevorzugt verläuft die Franse-Vernähung im Wesentlichen parallel zu den Glasfaserrovingen. Dadurch lässt sich der beschriebene Effekt guter Drapierbarkeit und Tränkbarkeit weiter erhöhen. Außerdem kann dadurch erreicht werden, dass das Gelege nur geringe bis gar keine Ondulation aufweist und auch deswegen besonders gut drapierbar ist. Dieser Effekt kommt bei teilungsgerechter Vernähung besonders zum Tragen.

Vorteilhafterweise hat die Franse-Vernähung eine Nähfeinheit zwischen 5 Fäden/Zoll und 12 Fäden/Zoll. Dadurch kann eine gute Stabilisierung des Geleges bei gleichzeitig guter Drapierbarkeit ohne Ondulation und guten Tränkungseigenschaften erreicht werden.

In bevorzugten Ausführungsformen ist parallel zur Gelegeausrichtung mindestens ein Stabilisierungselement vorhanden. Es kann in Endlosform oder mit endlicher Längenbemessung vorliegen. Dadurch kann ein gestrecktes und gerades Ablegen des Geleges in eine Form zur Weiterverarbeitung zu einem Bauteil aus faserverstärktem Verbundwerkstoff vereinfacht werden.

Vorteilhafterweise ist dabei das mindestens eine Stabilisierungselement stäbchenförmig. Somit können die mechanischen Eigenschaften des unidirektionalen Geleges im Hinblick auf die verstärkenden Eigenschaften in Bauteilen aus faserverstärktem Verbundwerkstoff verbessert werden.

Bevorzugt ist dazu das mindestens eine Stabilisierungselement als aus Glasfaser und Harz ausgebildet. Beim Pultrusionsverfahren, auch Strangziehverfahren genannt, handelt es sich um ein kontinuierliches Herstellungsverfahren zur Fertigung von faserverstärkten Kunststoffprofilen, den Pultrudaten. Diese können ihrerseits wegen ihrer guten mechanischen Eigenschaften als Verstärkung bei der Herstellung von Faserverbundwerkstoffen eingesetzt werden. Vorteilhafterweise ist dabei das Harz des Pultrudats auf das Matrixharz des endgültigen Faserverbundwerkstoffs abgestimmt.

Vorzugsweise ist die erste und/oder die zweite Stabilisierungslage als Querfadenlage und/oder als Vlies und/oder als Matte ausgebildet. Matten sind nichtgewebte Flächengebilde (auch nonwovens genannt), aus geschnittenen oder endlosen, meist regellos abgelegten Spinnfäden oder Fasern hergestellt werden können. Vliese sind ebenfalls nichtgewebte Flächengebilde (ebenfalls auch nonwovens genannt) aus statistisch wirren Endlosfasern, die ebenfalls gesponnen sein können. Unter Querfadenlagen werden Lagen von einzelnen, von einander weit beabstandet angeordneten Filamenten, Garnen oder Rovingen verstanden, deren Ausrichtung außerdem eine andere als die des unidirektionalen Geleges ist. Als weit beabstandet gelte ein Abstand von mindestens einer halben Breite der Glasfaserrovinge des Geleges. Haben die Glasfaserrovinge unterschiedliche Breiten, werde vom halben Medianwert der Breiten ausgegangen.

Bevorzugt weist mindestens eine Stabilisierungslage eine Querfadenlage auf, wobei die Querfadenlage unter einem Winkel im Bereich von 65° bis 110°, bevorzugt von 80° bis 100° zur Gelegeausrichtung angeordnet ist, wobei die Gelegeausrichtung durch die Orientierung der Glasfaserrovinge der unidirektionalen Gelegelage bzw. Gelegelagen definiert ist. Auf diese Weise kann eine möglichst gute Stabilisierungswirkung in der Stabilisierungslage durch einen guten Zusammenhalt in Querrichtung zur Gelegeausrichtung erreicht werden. Besonders bevorzugt weisen dazu beide Stabilisierungslagen eine Querfadenlage auf, die unter im Wesentlichen dem gleichen Winkel zur Gelegeausrichtung angeordnet sind. Ganz besonders bevorzugt besteht eine oder sogar beide Stabilisierungslagen aus einer solchen Querfadenlage.

Für den Fall, dass mindestens eine Stabilisierungslage eine Querfadenlage aufweist, ist diese Querfadenlage bevorzugt aus Glasfasermaterial. Dies hat den Vorteil, dass die Wahl des Harzes für die Herstellung eines Faserverbundwerkstoffs nicht zusätzlich durch die Art des Querfadens eingeschränkt wird. Vorteilhafterweise ist die mindestens eine Querfadenlage aus Glasfaserrovingen mit einem Gewicht zwischen 34 tex und 300 tex, bevorzugt 40 tex bis 150 tex, besonders bevorzugt 40 tex bis 80 tex, um eine möglichst gute Stabilisierungswirkung bei reduziertem Material in der Stabilisierungslage erreichen zu können.

Für den Fall, dass beide Stabilisierungslagen eine Querfadenlage aufweisen, sind vorteilhafterweise die Querfadenlagen maschengerecht abgebunden. Dadurch lässt sich erreichen, dass die Struktur des Geleges regelmäßiger bzw. homogener ausgebildet ist. Außerdem liegen die Glasfaserrovinge besonders flach, so dass bei einer Weiterverarbeitung, bei der eventuell zwei oder mehr der unidirektionalen Gelege aufeinander gelegt werden, deren Glasfaserrovinglagen einen geringeren Abstand zueinander aufweisen. Insgesamt wirkt sich die maschengerechte Abbindung der Querfadenlagen positiv auf die mechanischen Eigenschaften der resultierenden Bauteile aus faserverstärktem Verbundwerkstoff aus.

Vorzugsweise wird das hier vorgeschlagene unidirektionalen Gelege aus Glasfaserrovingen zur Herstellung von Komponenten von Windenergieerzeugungsanlagen, bevorzugt von Rotorblattkomponenten, besonders bevorzugt von Rotorblattgurten eingesetzt. Die hier vorgeschlagenen unidirektionalen Gelege erlauben die Herstellung von Faserverbundwerkstoffen mit sehr guten Festigkeitseigenschaften, wie sie beispielsweise bei Komponenten von Windenergieerzeugungsanlagen, insbesondere bei Rotorblattkomponenten und ganz besonders bei Rotorblattgurten gefordert sind.

Die vorliegende Erfindung soll unter Bezugnahme auf ein bevorzugtes Ausführungsbeispiel näher erläutert werden. Dazu zeigen
- Figur 1: schematisch den Aufbau eines Rotorblatts einer Windkraftanlage;
- Figur 2: schematisch den Aufbau eines Rotorblatts einer Windkraftanlage im Schnitt;
- Figur 3: schematisch den Aufbau eines Rotorblattgurts;
- Figur 4: schematisch den Aufbau eines Glasfaserrovings;
- Figur 5: schematisch den Aufbau eines unidirektionalen Geleges mit zwei Stabilisierungslagen aus Vlies;
- Figur 6: schematisch den Aufbau eines unidirektionalen Geleges mit zwei Stabilisierungslagen, die als Matten ausgebildet sind;
- Figur 7: schematisch den Aufbau eines unidirektionalen Geleges mit zwei Stabilisierungslagen, die als Querfadenlagen ausgebildet sind;
- Figur 8: schematisch eine Fransevernähung von vorne und von hinten;
- Figur 9: schematische eine Trikot-Fransevernähung von vorne und von hinten;
- Figur 10: schematisch eine Trikotvernähung von vorne und von hinten;
- Figur 11: schematische eine Draufsicht auf ein unidirektionales Gelege mit Trikot-Fransevernähung;
- Figur 12: schematische eine Draufsicht auf ein unidirektionales Gelege mit Fransevernähung; und
- Figur 13: schematisch den Aufbau eines unidirektionalen Geleges mit zwei Stabilisierungslagen aus Vlies und Stabilisierungselement in der Gelegelage.

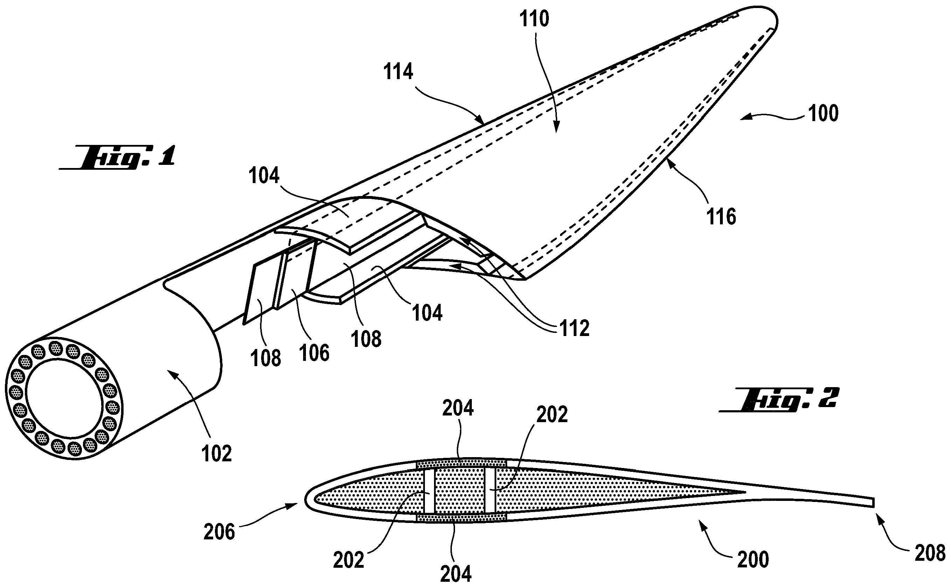

Wegen ihrer Festigkeitswerte sind Faserverbundwerkstoff, die unter Verwendung der hier vorgeschlagenen unidirektionalen Gelege aus Glasfaserrovingen hergestellt sind, insbesondere für die Fertigung von Komponenten von Windenergieerzeugungsanlagen geeignet. In Figur 1 ist schematisch der prinzipielle Aufbau eines Rotorblatts 100 einer Windenergieerzeugungsanlage dargestellt. In Fortsetzung des Wurzelsegments 102 ist das Rotorblatt 100 an der Drehachse einer Windenergieerzeugungsanlage befestigt. Unter der Schale 110 verläuft an der Oberseite und der Unterseite ein Gurt 104 über Schubstege 106, von denen nur einer in Figur 1 dargestellt ist. Dabei verlaufen die Gurte 104 näher an der Vorderkante 114 als an der Hinterkante 116. In Figur 2 ist ein Rotorblatt 200 im Schnitt schematisch dargestellt mit Gurten 204 und Schubstegen 202, wobei auch die Position jeweils der Hinterkante 208 und der Vorderkante 206 angegeben ist. Die Gurte 204 gehen vom Wurzelsegment bis zur Blattspitze durch das Rotorblatt hindurch.

Die Gurte 104 nehmen die Hauptlast der Kräfte auf, die bei Wind auf das Rotorblatt 100 wirken, und übertragen sie über die Achsnabe in ein Turbinengehäuse der Winderzeugungsanlage, um aus der kinetischen Windenergie elektrische Energie zu erzeugen. Daher muss bei den Gurten 104 die Zugsteifigkeit in Längsausdehnung des Rotorblatts besonders hoch sein, weshalb ein Faserverbundwerkstoff auf der Basis eines unidirektionalen Geleges besonders geeignet ist. Auch für den Vorder- und den Hinterkantenbereich können unidirektionale Gelege eingesetzt werden. Wegen der unterschiedlichen mechanischen Anforderungen können für andere Rotorblattkomponenten die Schale 110, die Schubstegverstärkungen 108, den Kernbereich 112 oder das Wurzelsegment 102 auch bi-, tri- oder multiaxiale Gelege eingesetzt werden.

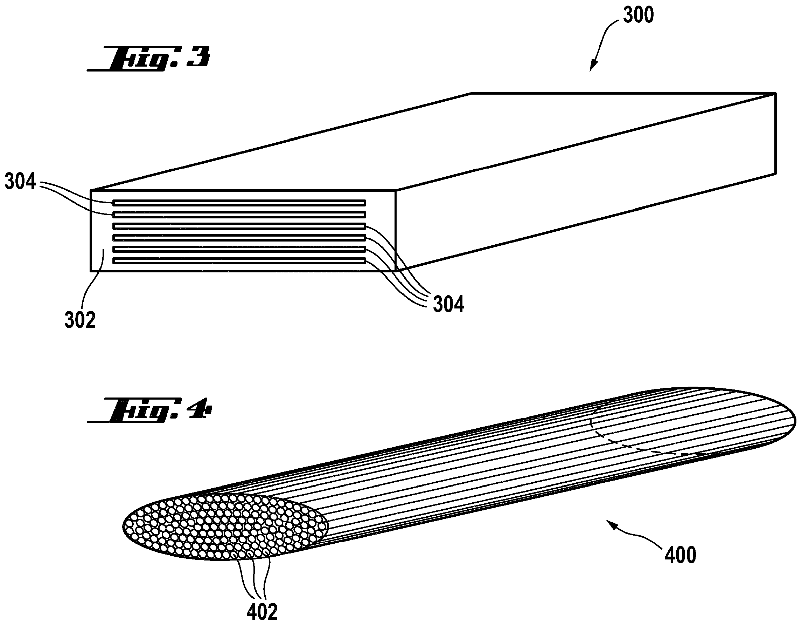

In Figur 3 ist der prinzipielle Aufbau eines Rotorblattgurts 300 schematisch dargestellt. Eine Mehrzahl von Gelegen 304 wurde entsprechend der Form des herzustellenden Gurts 300 aufeinandergeschichtet, mit Harz 302 versehen und dieser harzhaltige Gesamtaufbau ausgehärtet. Dies kann mit verschiedensten, dem Fachmann bekannten Verfahren geschehen: Beim RTM-Verfahren (von Resin Transfer Moulding) beispielsweise wird das Harz 302 in eine geschlossene Form gespritzt, in die die Gelege 304 zuvor eingebracht wurden. Beim Vakuum-Infusionsverfahren etwa werden die Gelege 304 in eine Form gelegt und mit einer luftdichten Kunststofffolie abgedeckt. Das Harz 302 wird mit Hilfe von Vakuum in die Gelege 304 zwischen Form und Folie gezogen. Wenn das Harz 302 ausgehärtet ist, wird die Kunststofffolie entfernt und der Gurt 300 aus der Form genommen. Geeignete Harze und Verfahrensparameter sind dem Fachmann bekannt.

In Figur 4 ist schematisch ein Glasfaserroving 400 aus einer Vielzahl von Glasfaserfilamenten 402 dargestellt. Üblicherweise haben Glasfaserrovinge einen Durchmesser zwischen ca. 12 µm und ca. 24 µm. Insbesondere für die Herstellung von Rotorblattgurten können Glasfaserrovinge 400 mit einem Durchmessen zwischen ca. 17 µm und 24 µm geeignet sein. Typische Titer sind ca. 1000 tex bis 9600 tex, bevorzugt 2400 bis 4800 tex.

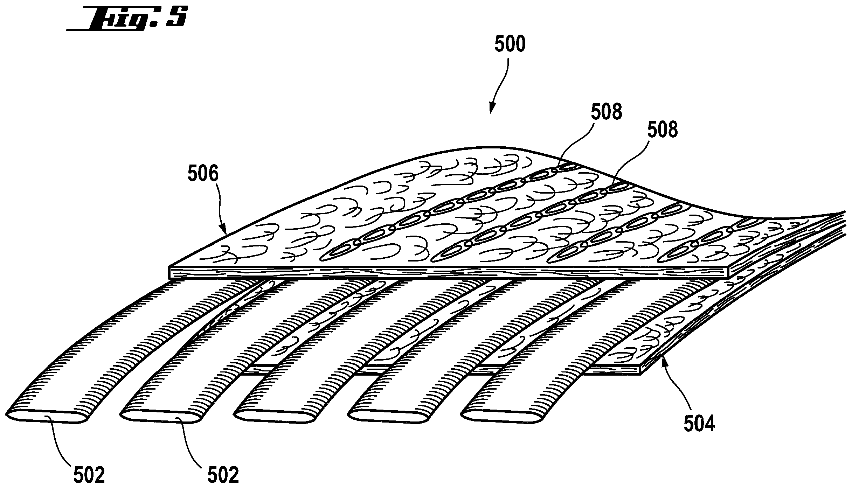

In den Figuren 5 bis 7 und 13 ist schematisch der Aufbau von verschiedenen unidirektionalen Gelegen 500, 600, 700, 1300 aus Glasfaserrovingen 502, 602, 702, 1302 zur Herstellung von Faserverbundwerkstoffen dargestellt, die eine erste Stabilisierungslage 504, 604, 704, 1304 auf dessen Unterseite und einer zweiten Stabilisierungslage 506, 606, 706, 1306 auf dessen Oberseite aufweisen, die miteinander mit einem Wirkfaden 508, 608, 708, 1308 vernäht sind. Der besseren Erkennbarkeit der zeichnerischen Details wegen handelt es sich bei den im vorliegenden Beispiel dargestellten unidirektionalen Gelegen 500, 600, 700, 1300 um teilungsgerecht und im wesentlichen parallel zu den Glasfaserrovingen 502, 602, 702, 1302 vernähte Varianten. Die Glasfaserrovinge 502, 602, 702, 1302 bilden eine unverfestigte, frei ausgebreitete Lage, wobei der besseren Übersichtlichkeit halber die Glasfaserrovinge 502, 602, 702, 1302 deutlich beabstandet und etwas gespreizt dargestellt sind. In weiteren Varianten kann die Vernähung auch nicht teilungsgerecht und/oder parallel zu den Glasfaserrovingen 502, 602, 702, 1302 sein. Sowohl die teilungsgerechte als auch die parallele Vernähung führen zu besonders regelmäßig strukturierten Gelegen ohne Faserschädigung und mit verringerter Neigung zur Ondulation. Dies wirkt sich positiv auf die mechanischen Eigenschaften der resultierenden Bauteile aus faserverstärktem Verbundwerkstoff aus. Außerdem können der Abstand der Glasfaserrovinge 502, 602, 702, 1302 bzw. ggf. ihr Überlapp und ihr Spreizungsgrad variieren.

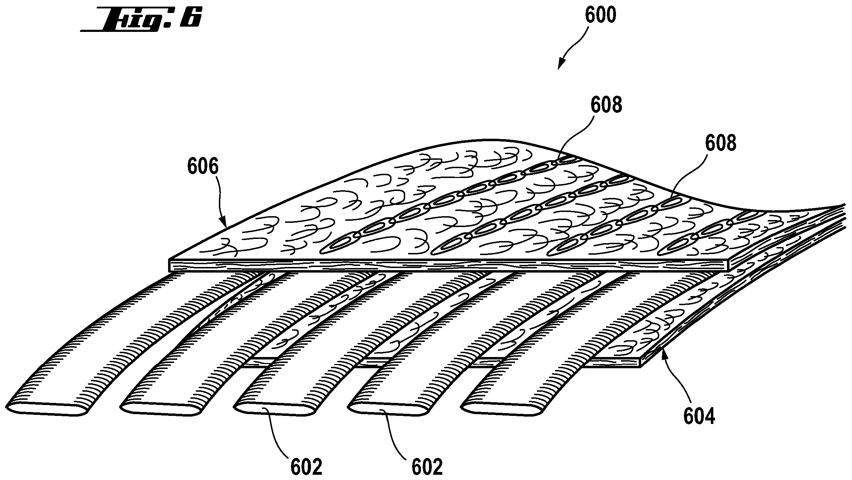

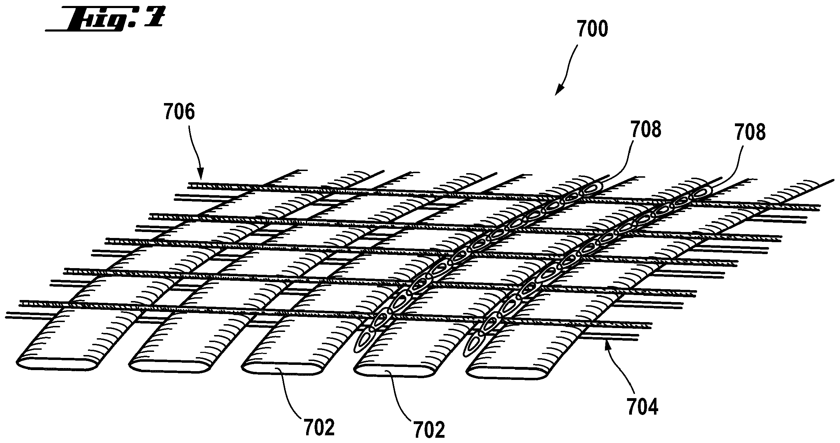

Die Gelege 500, 600, 700 entsprechend den Figuren 5, 6 und 7 unterscheiden sich dahingehend, dass die Stabilisierungslagen 504, 604, 704, 1304, 506, 606, 706, 1306 jeweils unterschiedlich ausgestaltet sind. In den vorliegenden Beispielen sind beide Stabilisierungslagen 504, 506, 604, 606, 704, 706 jeweils auf die gleiche Weise ausgestaltet. Bei dem in Figur 5 dargestellten Beispiel handelt es sich bei beiden Stabilisierungslagen 504, 506 um ein Vlies, bei dem in Figur 6 dargestellten Beispiel handelt es sich bei beiden Stabilisierungslagen 604, 606 um eine Matte und bei dem in Figur 7 dargestellten Beispiel bei beiden Stabilisierungslagen 704, 706 um eine Querfadenlage. In nicht dargestellten Varianten können beide Stabilisierungslagen auch jeweils unterschiedlich sowie mehrlagig ausgebildet sein. Im Falle der Variante mit Stabilisierungslagen mit Querfadenlage wie etwa in Figur 7 dargestellt kann die Querfadenlage bzw. zumindest eine der beiden Querfadenlagen auch weniger regelmäßig angeordnete Querfäden aufweisen, die ggf. weniger parallel angeordnet sein können.

Es sei darauf hingewiesen, dass in den hier dargestellten Beispielen die Gelege 500, 600, 700 genau drei Lagen, nämlich die zwei Stabilisierungslagen auf beiden Seiten einer Glasfaserrovinglage aufweisen. Die Gelege können in nicht dargestellten Varianten auch drei, vier, fünf oder mehr Stabilisierungslagen und zwei, drei, vier oder mehr unidirektionale Glasfaserrovinglagen aufweisen können. Sie können auch weitere, nicht spezifizierte Lagen aufweisen. Alle jeweils vorgesehenen Lagen können in beliebiger, an die gewünschte Anwendung angepasster Reihenfolge angeordnet sein. Vorteilhafterweise sind die beiden zu äußerst liegenden Lagen Stabilisierungslagen.

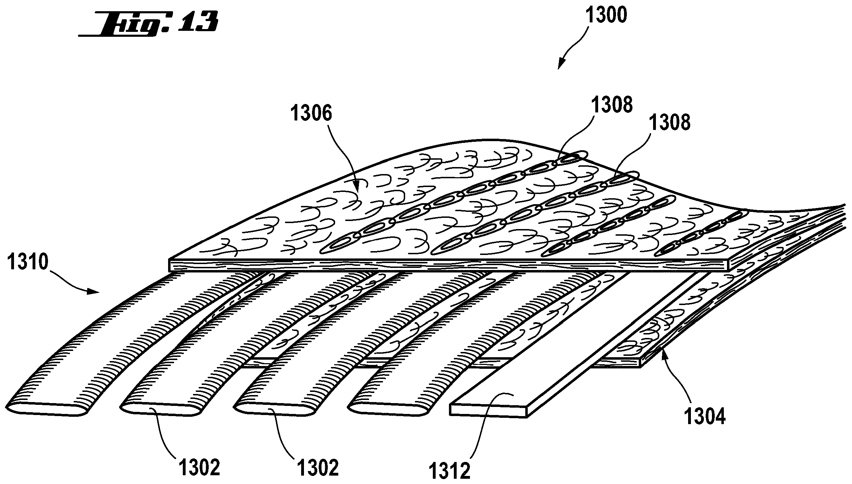

Das unidirektionale Gelege 1300 entsprechend dem in Figur 13 dargestellten Beispiel weist wie das in Figur 5 dargestellte Gelege je ein Vlies als erste bzw. zweite Stabilisierungslage 1304, 1306 auf. Es unterscheidet sich von den Beispielen gemäß den Figuren 5, 6, 7 insbesondere dahingehend, dass es parallel zur Gelegeausrichtung mindestens ein Stabilisierungselement 1312 aufweist. In dem in Figur 13 dargestellten Beispiel ist ein Gelege1300 mit vier Glasfaserrovingen 1302 und einem Stabilisierungselement 1312 dargestellt. In Varianten können statt jedem fünften Glasfaserroving 1302 auch mehr oder weniger Glasfaserrovinge 1302 durch ein Stabilisierungselement 1312 ersetzt werden. Dabei können die Stabilisierungselemente in regelmäßigen oder unregelmäßigen Abständen angeordnet werden. Im in Figur 13 dargestellten Beispiel ist das Stabilisierungselement 1312 stäbchenförmig und als Pultrudat aus Glasfaser und Harz ausgebildet. In Varianten kann es sich auch um Pultrudate aus anderen Fasern als Glasfasern handeln oder das Harz nicht oder nur teilweise ausgehärtet sein. Vorzugsweise ist das Pultrudatharz auf das Matrixharz des herzustellenden Faserverbundwerkstoffs abgestimmt.

Bei dem in Figur 7 dargestellten Beispiel mit Querfadenlagen als Stabilisierungslagen 704, 706 sind die Querfadenlagen aus Glasfaserrovingen mit einem Gewicht zwischen 34 tex und 300 tex, bevorzugt 40 tex bis 150 tex, besonders bevorzugt 40 tex bis 80 tex ausgeführt. Dabei sind beide Stabilisierungslagen 704, 706 unter im Wesentlichen dem gleichen Winkel zur Gelegeausrichtung angeordnet, nämlich ca. 90°. In Varianten können die Querfadenlage unter einem Winkel im Bereich von 65° bis 110°, bevorzugt von 80° bis 100° zur Gelegeausrichtung angeordnet sein. Im vorliegenden Beispiel haben die einzelnen Querfäden zueinander einen Abstand von etwas mehr als einer Breite eines Rovings 702 zueinander und sind durch die Vernähung mit den Glasfaserrovingen 702 mittels Wirkfaden 708 maschengerecht abgebunden.

Es sei darauf hingewiesen, dass das Material der Stabilisierungslagen sowie auch der Wirkfäden für das Vernähen an das bei der Weiterverarbeitung zu einem faserverstärkten Kunststoffbauteil verwendete Harz angepasst werden. Insbesondere können Hybridfasern verwendet werden. Es besteht auch die Möglichkeit, das Gelege mit Bindemittel zu versehen, um es als Vorformling in einer gewünschten Kontur oder Form zu fixieren.

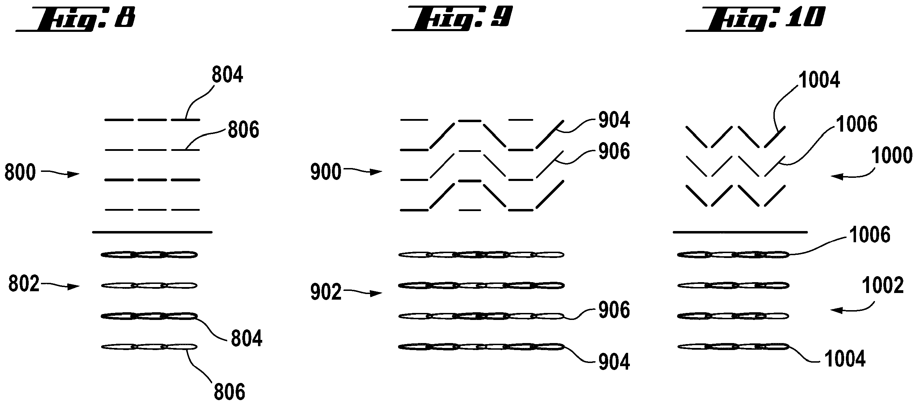

Das Vorhandensein von zwei Stabilisierungslagen in den in vorgeschlagenen unidirektionalen Glasrovinggelegen erlaubt das Vernähen der drei Lagen erste Stabilisierungslage, Gelegelage und zweite Stabilisierungslage mittels Fransestich. Die Struktur des Fransestichs ist in Figur 8 schematisch für einen ersten und einen zweiten Faden 804, 806 auf der Vorderseite 800 und der Rückseite 802. Zum Vergleich ist in Figur 9 der Trikot-Fransestich und in Figur 10 der Trikotstich analog dargestellt und zwar für jeweils einen ersten und einen zweiten Faden 904, 906 bzw. 1004, 1006 auf der Vorderseite 900 bzw. 1000 und der Rückseite 902 bzw. 1002. Beim Trikotstich und dem Trikot-Fransestich, die anders als der Franse-Stich auch bei unidirektionalen Glasrovinggelegen mit nur einer Stabilisierungsschicht eingesetzt werden können, wird der Wirkfaden immer oder zumindest zum Teil über die Rovinge herübergeführt, auch wenn das Vernähen parallel zu den Rovingen erfolgt. Dies führt dazu, dass es beim Einlegen der unidirektionalen Gelege bei Verformung in lateraler Richtung zu Verziehungen kommen kann, die sich als Ondulation des Geleges auswirken.

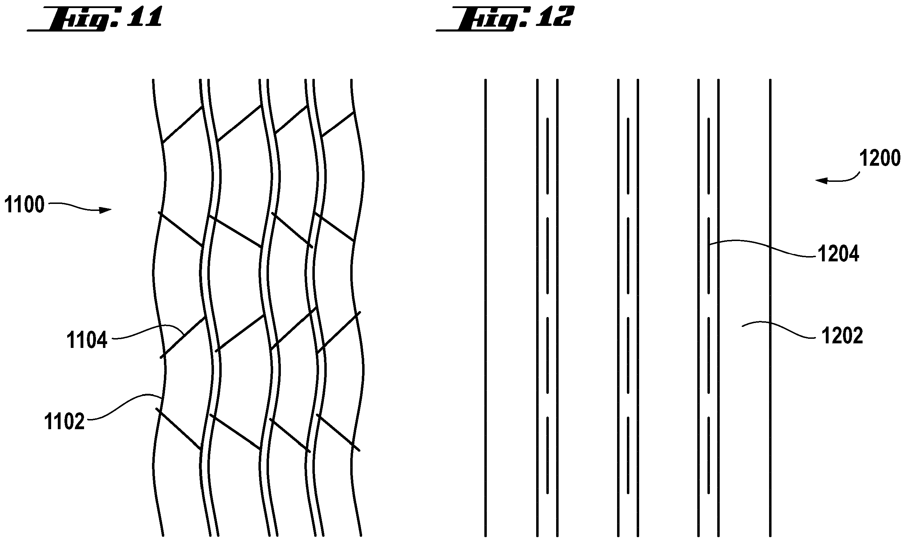

Dies ist in Figur 11 schematisch für ein unidirektionales Gelege 1100 aus Glasfaserrovingen 1102 und Wirkfäden 1104, die im Trikot-Fransestich vernäht sind, dargestellt. Bei einer Vernähung im Trikotstich ist die Ondulationsbildung noch stärker ausgeprägt. Die Ondulation kann nach der Verbundwerkstoffherstellung im resultierenden Bauteil zu geringeren Festigkeiten und Steifigkeiten als gewünscht führen und einen qualitativen Mangel darstellen. Weiterhin kann durch die Trikot-Fransevernähung bzw. durch eine Trikotvernähung die Drapierfähigkeit des unidirektionalen Geleges in lateraler Richtung vermindert werden, was beim Ablegen in eine Form zur Weiterverarbeitung zu Falten- und/oder Wellenbildung und in dessen Folge zu Festigkeitsverminderungen führen kann. Ferner kann das Führen des Wirkfadens 1104 über die Rovinge 1102 je nach Wirkfadenstärke zu einem ungewünschten Aufdicken des Geleges führen. Außerdem kann es in Abhängigkeit von der Wirkfadenstärke und der Nähkettspannung gerade bei nicht teilungsgerechter Vernähung in den Bereichen der Durchstiche zu einer Materialverdrängung kommen, die zu Ondulationen und Einschnürungen der Glasrovinge 1102 führen kann. Dies kann zur Folge haben, dass sich in den sich bildenden Hohlräumen an der Durchstichstelle Fehlstellen bzw. sogenannten "Fischaugen" ausbilden, an denen sich bei der Harzinfusion Harz ansammelt. Da ausgehärtete Harze oft spröde sind und sich der Wirkfaden bei den meisten Harzen nur bedingt mit der Harzmatrix verbindet, können im Grenzbereich zwischen Wirkfaden und Harzmatrix unter dynamischer Belastung Mikrorisse entstehen, die zu einer späteren Schädigung durch vorzeitige Materialermüdung führen können.

Bei einer Vernähung im Fransestich, wie in Figur 12 schematisch dargestellt, verlaufen die Wirkfäden 1204 parallel zu den unverändert geraden Rovingen 1202. Die Fransevernähung erlaubt ein viel besseres Verformungsverhalten in lateraler Richtung als bei einer Trikot- oder Trikot-Franse-Vernähung, so dass Wellen- und Faltenbildung beim Einbringen in eine Form vor der Harzinjektion vermieden werden kann. Die Drapierbarkeit ist mit Fransevernähung also deutlich besser als mit Trikot- oder Trikot-Franse-Vernähung. Außerdem können die Gelege ohne Ausstreichen flacher abgelegt werden. Insbesondere lässt sich das Franse-Vernähen auch so einrichten, dass die Glasfaserrovinge nicht durchstochen werden und sich bei der Weiterverarbeitung keine ungewollten Harzinseln ausbilden. Je höher der Wirkfadenanteil bezogen auf das hier vorgeschlagene unidirektionale Gelege ist, desto besser sind dessen Tränkungseigenschaften. Allerdings wirkt sich ein zu hoher Wirkfadenanteil negativ auf die Drapierbarkeit aus, so dass dadurch das Gelege steifer wird. Insbesondere für die Herstellung von Rotorblattgurten hat sich eine Nähfeinheit zwischen 5 Fäden/Zoll und 12 Fäden/Zoll im Hinblick auf gute Drapierbarkeit bei gleichzeitig guten Tränkungseigenschaften als geeignet erwiesen. Um die Tränkungsgeschwindigkeit zu erhöhen, können dickere Wirkfäden und/oder geringere Abstände der Wirkfäden zueinander vorgesehen werden.

Insgesamt weist aber das hier vorgeschlagene Gelege mit Franse-Vernähung bei sonst gleichen Parametern Durchdringungseigenschaften für Harz auf als entsprechende Gelege mit anderen maschenbildenden Verbindungen wie u.a. Trikot oder Trikot-Franse auf. Es sei darauf hingewiesen, dass die bessere Drapierbarkeit bei Fransevernähung verglichen mit anderen Vernähungsarten auch bei einer Vernähung unter einem anderen Winkel als parallel zu den Rovingen beobachtet werden kann.

Tests haben ergeben, dass im Vergleich mit unidirektionalen Glasrovinggelegen mit nur einer Stabilisierungslage und einer Trikot- bzw. einer Trikot-Franse-Vernähung bei ansonsten gleichen Bedingungen und Verfahrensparametern bei den hier vorgeschlagenen unidirektionalen Glasrovinggelegen mit zwei Stabilisierungslagen und einer Franse- Vernähung eine Steigerung der Zugfestigkeit in einem glasfaserverstärkten Laminat um im Bereich von ca. 25% bis 40% erreicht werden kann.

Betrachtet man exemplarisch einen Rotorblattgurt, der eine maximale Dicke von ca. 100 mm aufweisen soll, so benötigt man bei Gelegen mit einer Flächenbelegung von 1200 g/m² ca. 110 bis 120 Lagen eines unidirektionalen Glasrovinggeleges mit nur einer Stabilisierungslage und einer Trikot- bzw. einer Trikot-Franse-Vernähung, während man unter Verwendung des hier vorgeschlagenen unidirektionalen Glasrovinggeleges mit zwei Stabilisierungslagen und einer Franse-Vernähung beispielsweise nur noch 100 bis 110 übereinander angeordnete unidirektionale Gelege benötigt, um einen Rotorblattgurt mit vergleichbarere Festigkeit und Steifigkeit zu erhalten. Die geringere Gelegeanzahl hat den Vorteil, dass bei der Herstellung des Gurts kürzere Legezeiten und weniger Harz benötigt werden. Die daraus resultierende Gewichtseinsparung beim Gurt und damit auch beim Rotorblatt kann außerdem dazu führen, dass auch Gondel und Turm einer Windenergieerzeugungsanlage im Gewicht reduziert werden können.

Unter anderem wurden Zugversuche nach DIN EN ISO 527-5 an drei Varianten unidirektionaler Gelege aus Glasfaserrovingen durchgeführt. Bei allen drei hier exemplarisch herausgegriffenen Varianten handelte es sich um ausgehärtete Laminate aus Epoxidharz, nämlich aus dem in Handel als HEXION RIMR135/RIMH137 erhältlichen Harzsystem, auf der Basis von zwei übereinander angeordneten unidirektionalen Glasrovinggelegen, um die von der Norm verlangte Mindestdicke zu erreichen. Probe 1 wies zwei Glasrovinggelege aus Glasfasern erhältlich als NEG Hybon 2002 mit 2400 tex bzw. einer nominalen Flächenbelegung von 944 g/m² auf, mit jeweils einer ersten und einer zweiten Stabilisierungslage, die als Querfadenlagen aus NEG Hybon 2002 mit 68 tex bzw. einer nominalen Flächenbelegung von 12 g/m² und unter einem Winkel von ca. 87° zur Gelegeorientierung sowie im Schnitt 1,8 Fäden pro cm. Die Vernähung war mit einem 76 dtex Wirkfaden aus Polyester im Franse-Stich in Bezug auf die Querfadenlagen nicht maschengerecht mit einer Nähfeinheit von 10 Fäden/Zoll im wesentlichen parallel zu den Glasfaserrrovingen ausgeführt. Probe 2 unterschied sich von Probe 1 dahingehend, dass die zwei Glasrovinggelege aus Glasfasern erhältlich als 3B W2020 mit 2400 tex bzw. einer nominalen Flächenbelegung von 944 g/m² waren, also Fasern aus Hochmodulglas. Bei Probe 3 handelte es sich um eine Referenzprobe, die sich von Probe 1 dahingehend unterschied, dass sie nur eine Stabilisierungslage aufwies, die aber ansonsten wie bei Probe 1 bzw. Probe 2 ausgestaltet war, und dass die Vernähung abweichend von Probe 1 und Probe 2 als Trikot-Stich ausgeführt war.

Die Zugversuche nach DIN EN ISO 527-5 ergaben für Probe 1 eine durchschnittliche Zugfestigkeit von 1166 MPa, für Probe 2 von 1270 MPa und für die Referenzprobe 3 von 907 MPa. Da herstellungsbedingt der Faservolumengehalt um 53±2 Vol.-% schwankte, wurde für jede Probe der tatsächliche Gehalt gemessen und die gemessenen Zugfestigkeiten linear auf einen Fasergehalt von 53 Vol.-% umgerechnet.

Messungen an Proben mit anderen Harzsystemen, anderen Glasfaserrovingen, anderen Stabilisierungslagen, insbesondere auch mit Vliesen und Matten aber auch anderen Varianten der Querfadenlagen, insbesondere in Bezug auf deren Titer, Abstand oder Orientierung, sowie mit maschen- und/oder teilungsgerechter Vernähung wie auch mit Vernähungen mit anderen Nähfeinheiten ergaben ebenso Steigerungen der Zugfestigkeit.

### Bezugszeichen:

- 100: Rotorblatt
- 102: Wurzelsegment
- 104: Gurt
- 106: Schubsteg
- 108: Schubstegverstärkung
- 110: Schale
- 112: Kernbereich
- 114: Vorderkante
- 116: Hinterkante
- 200: Rotorblatt
- 202: Schubsteg
- 204: Gurt
- 206: Vorderkante
- 208: Hinterkante
- 300: Gurt
- 302: Harz
- 304: Gelege
- 400: Roving
- 402: Filament
- 500: Gelege
- 502: Glasfaserroving
- 504: erste Stabilisierungslage
- 506: zweite Stabilisierungslage
- 508: Wirkfaden
- 600: Gelege
- 602: Glasfaserroving
- 604: erste Stabilisierungslage
- 606: zweite Stabilisierungslage
- 608: Wirkfaden
- 700: Gelege
- 702: Glasfaserroving
- 704: erste Stabilisierungslage
- 706: zweite Stabilisierungslage
- 708: Wirkfaden
- 800: Vorderseite
- 802: Rückseite
- 804: erster Faden
- 806: zweiter Faden
- 900: Vorderseite
- 902: Rückseite
- 904: erster Faden
- 906: zweiter Faden
- 1000: Vorderseite
- 1002: Rückseite
- 1004: erster Faden
- 1006: zweiter Faden
- 1100: Gelege
- 1102: Roving
- 1104: Wirkfaden
- 1200: Gelege
- 1202: Roving
- 1204: Wirkfaden
- 1300: Gelege
- 1302: Glasfaserroving
- 1304: erste Stabilisierungslage
- 1306: zweite Stabilisierungslage
- 1308: Wirkfaden
- 1310: Gelegelage
- 1312: Stabilisierungselement

## Patentansprüche

1. Unidirektionales Gelege aus Glasfaserrovingen zur Herstellung von Faserverbundwerkstoffen mit einer ersten Stabilisierungslage (504, 604, 704, 1304) auf dessen Unterseite und einer zweiten Stabilisierungslage (506, 606, 706, 1206) auf dessen Oberseite, **dadurch gekennzeichnet, dass** sie mittels Franse-Vernähung (508, 608, 708, 804, 806, 1204, 1308) miteinander vernäht sind.

2. Unidirektionales Gelege nach Anspruch 1, **dadurch gekennzeichnet, dass** die Franse- Vernähung (508, 608, 708, 804, 806, 1204, 1308) im Wesentlichen parallel zu den Glasfaserrovingen (400, 502, 602, 702, 1202, 1302) verläuft.

3. Unidirektionales Gelege nach Anspruch 1 oder 2, **dadurch gekennzeichnet, dass** die Franse-Vernähung (508, 608, 708, 804, 806, 1204, 1308) eine Nähfeinheit zwischen 5 Fäden/Zoll und 12 Fäden/Zoll aufweist.

4. Unidirektionales Gelege nach einem der Ansprüche 1 bis 3, **dadurch gekennzeichnet, dass** parallel zur Gelegeausrichtung mindestens ein Stabilisierungselement (1312) vorhanden ist.

5. Unidirektionales Gelege nach Anspruch 4, **dadurch gekennzeichnet, dass** das mindestens ein Stabilisierungselement (1312) stäbchenförmig ist.

6. Unidirektionales Gelege nach Anspruch 5, **dadurch gekennzeichnet, dass** das mindestens eine Stabilisierungselement als Pultrudat (1312) aus Glasfaser und Harz ausgebildet ist.

7. Unidirektionales Gelege nach einem der Ansprüche 1 bis 6, **dadurch gekennzeichnet, dass** die erste und/oder die zweite Stabilisierungslage (504, 506, 604, 606, 704, 706, 1304, 1306) als Querfadenlage (704, 706) und/oder als Vlies (504, 506, 1304, 1306) und/oder als Matte ausgebildet (604, 606) ist.

8. Unidirektionales Gelege nach Anspruch 7, wobei mindestens eine Stabilisierungslage (504, 506, 604, 606, 704, 706, 1304, 1306) eine Querfadenlage (704, 706) aufweist, **dadurch gekennzeichnet, dass** die Querfadenlage (704, 706) unter einem Winkel im Bereich von 65° bis 110°, bevorzugt von 80° bis 100° zur Gelegeausrichtung angeordnet ist.

9. Unidirektionales Gelege nach Anspruch 8, **dadurch gekennzeichnet, dass** beide Stabilisierungslagen (504, 506, 604, 606, 704, 706, 1304, 1306) eine Querfadenlage (704, 706) aufweisen, die unter im Wesentlichen dem gleichen Winkel zur Gelegeausrichtung angeordnet sind.

10. Unidirektionales Gelege nach einem der Ansprüche 7 bis 9, wobei mindestens eine Stabilisierungslage (504, 506, 604, 606, 704, 706, 1304, 1306) eine Querfadenlage (704, 706) aufweist, **dadurch gekennzeichnet, dass** die Querfadenlage (704, 706) aus Glasfaser ist.

11. Unidirektionales Gelege nach Anspruch 10, **dadurch gekennzeichnet, dass** die Querfadenlage (704, 706) aus Glasfaserrovingen (704, 706) mit einem Gewicht zwischen 34 tex und 300 tex sind.

12. Unidirektionales Gelege nach einem der Ansprüche 7 bis 11, wobei beide Stabilisierungslagen (504, 506, 604, 606, 704, 706, 1304, 1306) eine Querfadenlage (704, 706) aufweisen, **dadurch gekennzeichnet, dass** die Querfadenlagen (704, 706) maschengerecht abgebunden sind.

13. Verwendung des unidirektionalen Geleges gemäß den Ansprüchen 1 bis 12 zur Herstellung von Komponenten (100, 102, 104, 106, 108, 110, 112, 114, 116, 200, 202, 204, 300) von Windenergieerzeugungsanlagen.

14. Verwendung nach Anspruch 13, **dadurch gekennzeichnet, dass** Rotorblattkomponenten (102, 104, 106, 108, 110, 112, 114, 116, 202, 204, 300) hergestellt werden.

15. Verwendung nach Anspruch 13 oder 14, **dadurch gekennzeichnet, dass** Rotorblattgurte (104, 204, 300) hergestellt werden.

## Claims

1. A unidirectional non-crimp fabric of glass fibre rovings for the production of fibre composites comprising a first stabilisation layer (504, 604, 704, 1304) on the underside thereof and a second stabilisation layer (506, 606, 706, 1206) on the upper side thereof, **characterised in that** they are sewn to each other by means of pillar stitching (508, 608, 708, 804, 806, 1204, 1308).

2. The unidirectional non-crimp fabric according to claim 1, **characterised in that** the pillar stitching (508, 608, 708, 804, 806, 1204, 1308) extends essentially parallel to the glass fibre rovings (400, 502, 602, 702, 1202, 1302).

3. The unidirectional non-crimp fabric according to claim 1 or 2, **characterised in that** the pillar stitching (508, 608, 708, 804, 806, 1204, 1308) has a stitch density of between 5 stitches per inch (spi) and 12 stitches per inch (spi).

4. The unidirectional non-crimp fabric according to any one of claims 1 to 3, **characterised in that** at least one stabilising element (1312) is present in parallel to the direction of the non-crimp fabric.

5. The unidirectional non-crimp fabric according to claim 4, **characterised in that** the at least one stabilising element (1312) is rod-shaped.

6. The unidirectional non-crimp fabric according to claim 5, **characterised in that** the at least one stabilising element is formed as a pultrudate (1312) of glass fibre and resin.

7. The unidirectional non-crimp fabric according to any one of claims 1 to 6, **characterised in that** the first and/or the second stabilising layer (504, 506, 604, 606, 704, 706, 1304, 1306) is formed as a weft layer (704, 706) and/or as a fleece (504, 506, 1304, 1306) and/or as a mat (604, 606).

8. The unidirectional non-crimp fabric according to claim 7, wherein at least one stabilising layer (504, 506, 604, 606, 704, 706, 1304, 1306) includes a weft layer (704, 706), **characterised in that** the weft layer (704, 706) is arranged at an angle in the range of 65° to 110°, preferably 80° to 100°, with respect to the direction of the non-crimp fabric.

9. The unidirectional non-crimp fabric according to claim 8, **characterised in that** both stabilising layers (504, 506, 604, 606, 704, 706, 1304, 1306) include a weft layer (704, 706) arranged at essentially the same angle with respect to the direction of the non-crimp fabric.

10. The unidirectional non-crimp fabric according to any one of claims 7 to 9, wherein at least one stabilising layer (504, 506, 604, 606, 704, 706, 1304, 1306) includes a weft layer (704, 706), **characterised in that** the weft layer (704, 706) is made of glass fibres.

11. The unidirectional non-crimp fabric according to claim 10, **characterised in that** the weft layer (704, 706) is made of glass fibre rovings (704, 706) having a weight of between 34 tex and 300 tex.

12. The unidirectional non-crimp fabric according to any one of claims 7 to 11, wherein both stabilising layers (504, 506, 604, 606, 704, 706, 1304, 1306) include a weft layer (704, 706), **characterised in that** the weft layers (704, 706) are stitched true to mesh.

13. Use of the unidirectional non-crimp fabric according to any one of claims 1 to 12 for the production of components (100, 102, 104, 106, 108, 110, 112, 114, 116, 200, 202, 204, 300) of wind turbines.

14. The use according to claim 13, **characterised in that** rotor blade components (102, 104, 106, 108, 110, 112, 114, 116, 202, 204, 300) are produced.

15. The use according to claim 13 or 14, **characterised in that** rotor blade belts (104, 204, 300) are produced.

## Revendications

1. Structure unidirectionnelle en stratifils de fibres de verre pour la production de matériaux composites fibreux avec une première couche de stabilisation (504, 604, 704, 1304) sur sa face inférieure et une deuxième couche de stabilisation (506, 606, 706, 1206) sur sa face supérieure, **caractérisés en ce qu'**elles sont cousus ensemble par jettées de chaînette (508, 608, 708, 804, 806, 1204, 1308).

2. Structure unidirectionnelle selon la revendication 1, **caractérisé en ce que** la couture de jettées de chaînette (508, 608, 708, 804, 806, 1204, 1308) s'étend essentiellement parallèlement aux stratifils de fibres de verre (400, 502, 602, 702, 1202, 1302).

3. Structure unidirectionnelle selon la revendication 1 ou 2, **caractérisée en ce que** la couture de jettées de chaînette (508, 608, 708, 804, 806, 1204, 1308) a une finesse de couture comprise entre 5 fils/pouce et 12 fils/pouce.

4. Structure unidirectionnelle selon l'une des revendications 1 à 3, **caractérisée en ce qu'**au moins un élément de stabilisation (1312) est présent parallèlement à l'alignement de la structure.

5. Structure unidirectionnelle selon la revendication 4, **caractérisée en ce que** le au moins un élément de stabilisation (1312) est en forme de baguette.

6. Structure unidirectionnelle selon la revendication 5, **caractérisée en ce que** le au moins un élément stabilisateur est réalisé sous la forme d'un pultrudat (1312) en fibre de verre et résine.

7. Structure unidirectionnelle selon l'une des revendications 1 à 6, **caractérisée en ce que** la première et/ou la deuxième couche de stabilisation (504, 506, 604, 606, 704, 706, 1304, 1306) est réalisée en tant que couche de fils transversaux (704, 706) et/ou en tant que non-tissé (504, 506, 1304, 1306) et/ou réalisé en tant que mat (604, 606).

8. Structure unidirectionnelle selon la revendication 7, dans laquelle au moins une couche de stabilisation (504, 506, 604, 606, 704, 706, 1304, 1306) a une couche de fils transversaux (704, 706), **caractérisé en ce que** la couche de fils transversaux (704 , 706) est disposée à un angle de 65° à 110°, de préférence de 80° à 100° par rapport à l'alignement de la structure.

9. Structure unidirectionnelle selon la revendication 8, **caractérisée en ce que** les deux couches de stabilisation (504, 506, 604, 606, 704, 706, 1304, 1306) présentent une couche de fils transversaux (704, 706), qui sont disposées sensiblement au même angle par rapport à l'alignement de la structure.

10. Structure unidirectionnelle selon l'une des revendications 7 à 9, dans laquelle au moins une couche de stabilisation (504, 506, 604, 606, 704, 706, 1304, 1306) présente une couche de fils transversaux (704, 706), **caractérisée en ce que** la couche de fils transversaux (704, 706) est réalisé en fibres de verre.

11. Structure unidirectionnelle selon la revendication 10, **caractérisée en ce que** les couches de fils transversaux (704, 706) sont constituées de stratifils de fibres de verre (704, 706) d'un poids compris entre 34 tex et 300 tex.

12. Structure unidirectionnelle selon l'une des revendications 7 à 11, dans laquelle les deux couches de stabilisation (504, 506, 604, 606, 704, 706, 1304, 1306) comportent une couche de fils transversaux (704, 706), **caractérisée en ce que** les couches de fils transversaux (704, 706) sont noués suivant les mailles.

13. Utilisation de la structure unidirectionnelle selon les revendications 1 à 12 pour la fabrication de composants (100, 102, 104, 106, 108, 110, 112, 114, 116, 200, 202, 204, 300) d'éoliennes.

14. Utilisation selon la revendication 13, **caractérisée en ce que** des composants de pale de rotor (102, 104, 106, 108, 110, 112, 114, 116, 202, 204, 300) sont produits.

15. Utilisation selon la revendication 13 ou 14, **caractérisée en ce que** des courroies de pales de rotor (104, 204, 300) sont produites.
